**Europäisches Patentamt**

**European Patent Office**

**Office européen des brevets**

(19)

(11) Veröffentlichungsnummer : **0 060 905**
**B1**

# EUROPÄISCHE PATENTSCHRIFT

(12)

(45) Veröffentlichungstag der Patentschrift :
07.11.84

(51) Int. Cl.³ : **H 01 R 4/68, B 23 K 20/02**

(21) Anmeldenummer : **81102136.9**

(22) Anmeldetag : **21.03.81**

(54) **Kabelverbindung für ein Hochstrom-Supraleiterkabel und Einrichtung zum Löten der Supraleiterdrähte.**

(43) Veröffentlichungstag der Anmeldung :
**29.09.82 Patentblatt 82/39**

(45) Bekanntmachung des Hinweises auf die Patenterteilung : **07.11.84 Patentblatt 84/45**

(84) Benannte Vertragsstaaten :
**DE FR GB**

(56) Entgegenhaltungen :
**DE-A- 1 930 034**
**DE-A- 2 251 258**

(73) Patentinhaber : **Kernforschungszentrum Karlsruhe GmbH**
**Weberstrasse 5**
**D-7500 Karlsruhe 1 (DE)**

(72) Erfinder : **Reiner, Johann**
**Georg-Adam-Lang-Strasse 2**
**D-7515 Linkenheim (DE)**

**Beschreibung**

Die Erfindung betrifft eine Kabelverbindung nach dem Oberbegriff des Anspruches 1 und eine Einrichtung zum Herstellen einer Lötverbindung zwischen den Supraleiterdrähten und dem Trägerband einer Kabelverbindung gemäss dem Oberbegriff des Anspruches 5.

Zum Testen von Hochstrom-Supraleiterkabeln, wie sie in großen Fusionsmagneten verwendet werden, wird in eine kurzgeschlossene Schliefe des Test-Kabels ein Strom von 10 bis 20 kA induktiv eingekoppelt. Die Kühlung des Testkreises erfolgt mit einer Zwangsströmung von superkritischem Helium bei Drücken bis 15 bar in einem geschlossenen Kreislauf. Die kurzgeschlossene Schleife des Test-Kabels ist in einem Hintergrundfeld von 5,3 Tesla angeordnet.

Bei einer bekannten Verbindung zweier Supraleiterenden (DE-A-1 930 034) erhalten diese zungenförmige Fortsätze, die nach Art einer einfachen Fugenverbindung ineinander greifen.

Der Erfindung liegt die Aufgabe zugrunde, eine Verbindung für ein zwangsgekühltess-Kabel zu entwickeln, deren elektrischer Widerstand sehr klein und deren mechanische Festigkeit sehr hoch ist und die eine Flüssighelium-Ein- und Ausspeisung aufweist.

Diese Aufgabe wird bei einer Kabelverbindung nach dem Oberbegriff des Anspruches 1 durch die in dessen Kennzeichen genannten Merkmale gelöst.

Die mit der vorgeschlagenen Kabelverbindung erzielten Vorteile bestehen insbesondere darin, daß die Überlappungslänge der Supraleiterdrähte sehr klein ist (ca. 3,5 mal Breite des SL-Kabels) und dennoch eine gute Stromverteilung und eine gute Kühlung der Kabelverbindung möglich ist.

Ein Ausführungsbeispiel einer Kabelverbindung mit den Merkmalen der Ansprüche 1 bis 4 und eine Einrichtung zum Herstellen einer Lötverbindung der Supraleiterdrähte und des Trägerbandes ist in der Zeichnung dargestellt und wird im folgenden näher beschrieben. Es zeigen :

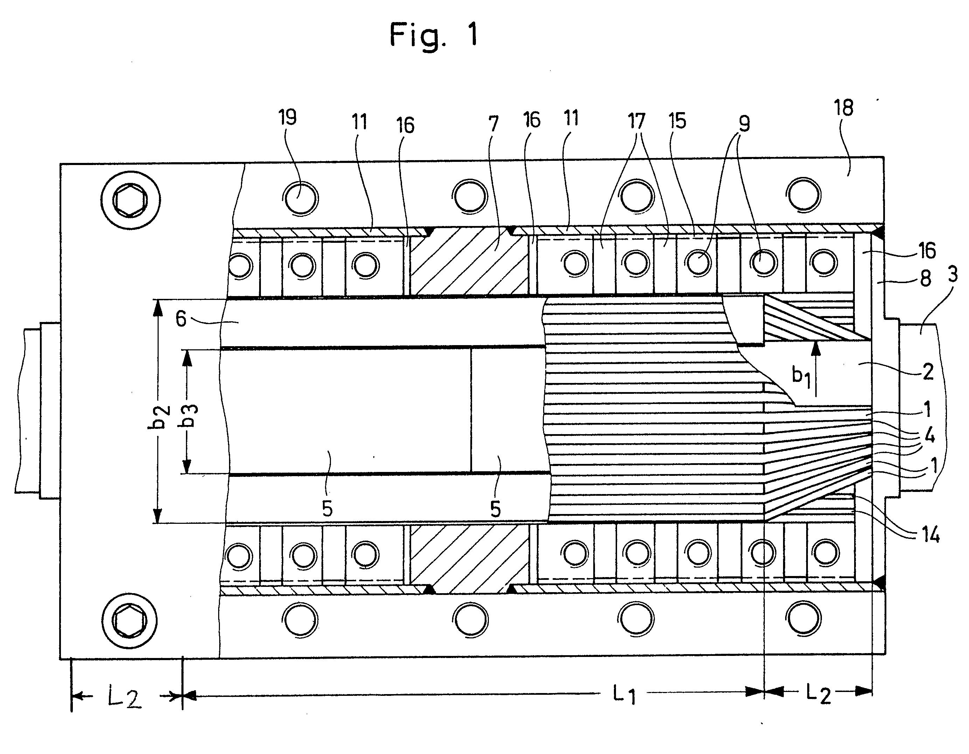

Figur 1   Ansicht der Kabelverbindung mit freiliegenden Supraleiterdrähten,
Figur 2   Querschnitt der Kabelverbindung,
Figur 3   Längsschnitt der Kabelverbindung,
Figur 4   Ansicht der Einrichtung zum Herstellen der Lötverbindung.

Eine Vielzahl von Supraleiterdrähten 1 mit Rechteckquerschnitt, die z. B. aus in eine Kupfermatrix eingebetteten Niob-Titan-Filamenten bestehen, ist auf einem Trägerband 2 aus Chrom-Nickel-Stahl verseilt oder verröbelt und bildet von einem Rechteckrohr 3 aus Edelstahl umschlossen ein Supraleiterkabel.

Die Supraleiterdrähte 1 sind mit dem Trägerband 2 unter Einhaltung eines Abstandes verlötet, so daß Kühlkanäle 4 für den Transport von Flüssighelium gebildet werden.

Beim Herstellen einer Kabelverbindung wird zunächst das Rechteckrohr 3 entfernt und die Supraleiterdrähte 1 von dem Trägerband 2 abgelötet. Die Länge L der freigelegten Supraleiterdrähte 1 ergibt sich aus der Länge $L_1$ eines Überlappungsbereiches, in dem die Supraleiterdrähte 1 des einen Kabelendes mit den SL-Drähten des anderen Kabelendes alternierend nebeneinander liegen, und aus der Länge $L_2$ eine Übergangsbereiches, in dem die SL-Drähte aus der Position des Kabels einer Breite $b_1$ des Trägerbandes 2 auf die Position der Kabelverbindung einer größeren Breite $b_2$ übergeführt sind.

Das Trägerband 2 besteht aus einem Blechstreifen, bei dem ein Randstreifen von 1/4 der Gesamtbreite an jeder der beiden Längsseiten gefalzt ist. Dieser Randstreifen wird im Überlappungsbereich entfernt und an jedem der zu verbindenden Kabelenden wird das Restträgerband 5 um ein halbe Länge $L_1/2$ des Überlappungsbereiches gekürzt, so daß die Trägerbänder 2 in der Mitte der Kabelverbindung stumpf aufeinander stoßen.

Ein Füllstreifen 6 von der Länge $L_1$ des Überlappungsbereiches ist im Überlappungsbereich der Länge $L_1$ auf dem Restträgerband 5 der Kabelenden angeordnet und in dem die Breite $b_3$ des Restträgerbandes 5 überragenden Bereich durch Falzen auf die Dicke d des Trägerbandes 2 verstärkt und auf die Breite $b_2$ des SL-Kabels im Überlappungsbereich begrenzt.

Im Überlappungsbereich sind die Supraleiterdrähte 1 der zu verbindenden Supraleiterkabel alternierend nebeneinander auf das Restträgerband 5 oder auf den Füllstreifen 6 aufgelötet.

In der Mitte des Überlappungsbereiches sind die Supraleiterdrähte 1 gemeinsam von einer aus zwei miteinander heliumdicht verschweißten Teilen gebildeten Manchette 7 umschlossen.

Das Ende jedes der Rechteckrohre 3 ist durch einen mit dem Rechteckrohr 3 heliumdicht verschweißten Rechteckflansch 8 abgeschlossen.

Zwischen Manchette 7 und Rechteckflansch 8 ist auf die Supraleiterdrähte 1 ein aus zwei am Rande durch Schrauben 9 miteinander verbundenen Teilen bestehendes Klemmstück 10 aufgesetzt.

Jedes der Klemmstücke 10 ist von einem aus zwei heliumdicht miteinander verschweißten Teilen bestehenden Abdeckblech 11 umschlossen, das mit der Manchette 7 und dem Rechteckflansch 8 heliumdicht verschweißt ist. Eines der zwei Teile des Abdeckbleches 11 weist eine Bohrung 12 auf, in die ein Kühlmittel transportierendes Rohr 13 heliumdicht eingeschweißt ist.

Auf diese Weise ist es möglich, z. B. bei einem zu einem Kurzschlußring verbundenen Kabel an dem einen Rohr 13 Flüssighelium zu- und an dem anderen Rohr 13 wieder abzuführen.

Damit die Supraleiterdrähte 1 auch im Überlappungsbereich ausreichend gekühlt werden, weist das Klemmstück 10 an seiner den Supraleiterdrähten 1 zugewandten Seite in Kabellängsrichtung verlaufende erste Kühlkanäle 14 und an den dem Abdeckblech 11 zugewandten Längsseiten in Kabellängsrichtung verlaufende zweite Kühlkanäle 15 auf, die in Kammern 16 einmünden, welche quer zur Kabellängsrichtung verlaufen und zwischen einer Stirnseite des Klemmstückes 10 und dem Rechteckflansch 8 oder der Manchette 7 gebildet sind.

Das Klemmstück 7 weist außerdem auf seiner dem Abdeckblech 11 zugewandten Seite quer zur Kabellängsrichtung verlaufende dritte, die zweite Kühlkanäle 15 verbindende Kühlkanäle 17 auf.

In dem Bereich zwischen den Rechteckflanschen 8 kann eine aus zwei Teilen bestehende, die Abdeckbleche 11 und die Manchette 7 umschließende Spannvorrichtung 18 zum Aufnehmen von durch höhere Kühlmitteldrücke verursachten mechanischen Kräften angeordnet werden. An den Längsseiten der Spannvorrichtung 18 sind Verschraubungen 19 und im Bereich der Rohre 13 Bohrungen 20 vorgesehen.

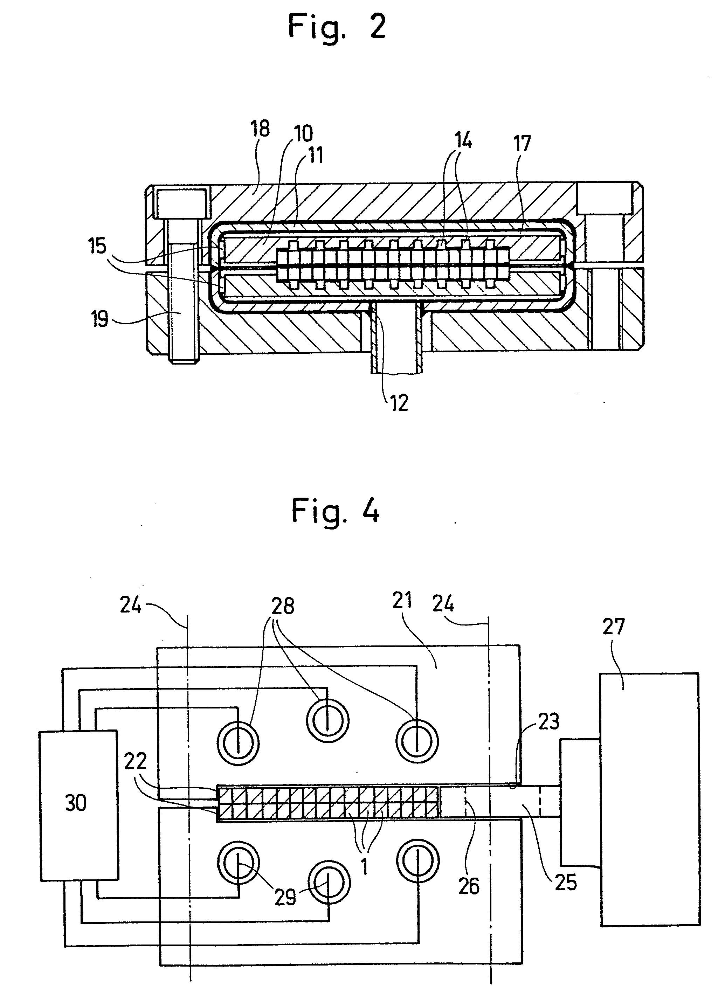

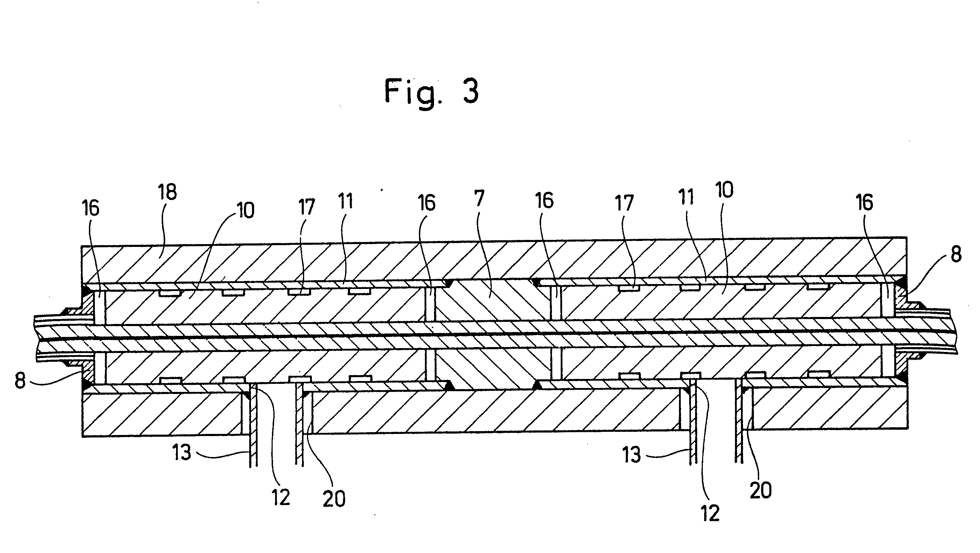

In Fig. 2 ist ein Schnitt quer zur Kabellängsrichtung und in Fig. 3 ein Schnitt in Kabellängsrichtung dargestellt.

Das Verlöten der alternierend angeordneten Supraleiterdrähte 1 mit dem Restträgerband 5 und dem Füllstreifen 6 wird wesentlich vereinfacht durch die in Fig. 4 gezeigte Einrichtung.

Diese besteht im wesentlichen aus zwei einander identischen flachen Klemmbacken 21, die an einer Längsseite einen Anschlag 22 aufweisen und an der anderen Längsseite einen durchgehenden Spalt 23 bilden.

Die Klemmbacken 21 werden von beiden Seiten auf die Supraleiterdrähte 1 der zu verbindenden Supraleiterkabel aufgesetzt, die alternierend auf dem Restträgerband 5 und dem Füllstreifen 6 geordnet sind.

Die Klemmbacken 21 werden durch an deren Längsseiten angeordnete Spannschrauben 24 senkrecht zur Ebene des Restträgerbandes 5 zusammengeführt und dabei die zwischen den Klemmbacken 21 liegenden Supraleiterdrähte 1 auf das Restträgerband 5 bzw. den Füllstreifen 6 gedrückt.

In den seitlichen Spalt 23 ist eine Preßschiene 25 eingeführt, die im Bereich der Spannschrauben 24 Langlöcher 26 aufweist und auf die z. B. mit einer hydraulischen Presse 27 eine in Richtung der Ebene des Restträgerbandes 5 wirkende Kraft F ausgeübt wird, welche die Supraleiterdrähte 1 zusammendrückt.

Jede der Klemmbacken 21 weist mehrere in Längsrichtung angeordnete Bohrungen 28 auf, in die Heizstäbe 29 eingeführt sind, deren Temperatur mit einem elektronischen Temperaturregler 30 so eingestellt wird, daß ein um des Restträgerband 5 und den Füllstreifen 6 gelegtes Lötband geschmolzen, die Supraleiterdrähte 1 jedoch nicht zerstört werden.

Bei schmelzflüssigem Lötband werden durch Anziehen der Spannschrauben 24 und durch entsprechendes Einstellen der Kraft F die zuvor verzinnten Supraleiterdrähte 1 miteinander und mit dem Restträgerband 5 und dem Füllstreifen 6 kompakt und frei von Zwischenräumen fest verlötet.

Bezugszeichenliste

Figur 1 bis 3

1 Supraleiterdrähte
2 Trägerband
3 Rechteckrohr
4 Kabelkanäle
5 Restträgerband
L Länge der freigelegten SL-Drähte
$L_1$ Länge des Überlappungsbereiches
$L_2$ Länge des Übergangsbereiches
$b_1$ Breite von 2
$b_2$ Breite des SL-Kabels im Überlappungsbereich
d Dicke von 2
6 Füllstreifen
$b_3$ Breite von 5
7 Manchette um 1
8 Rechteckflansch
9 Schrauben für 10
10 Klemmstück
11 Abdeckblech
12 Bohrung in 11
13 Rohr in 12
14 1. Kühlkanäle in 10
15 2. Kühlkanäle in 10
16 Kammer
17 3. Kühlkanäle in 10
18 Spannvorrichtung
19 Verschraubung von 18
20 Bohrungen in 18

3

Figur 4

21 Klemmbacken
22 Anschlag an 21
23 Spalt
24 Spannschrauben
25 Preßschiene
26 Langlöcher
27 hydraulische Presse
 F Kraft auf 25
28 Bohrungen in 21
29 Heizstäbe in 28
30 Temperaturregler

**Ansprüche**

1. Kabelverbindung für Hochstrom-Supraleiterkabel, deren Supraleiterdrähte (1) zum Bilden durchgehender, Flüssighelium führender Kühlkanäle (4) in einem Rechteckrohr (3) auf den beiden Seiten eines Trägerbandes (2) in einem vorbestimmten gegenseitigen Abstand angeordnet sind, gekennzeichnet durch folgende Merkmale,

a) von dem aus einem Blechstreifen durch Falzen eines Randstreifens von 1/4 der Gesamtbreite an jeder der beiden Längsseiten gebildeten Trägerband (2) sind die gefalzten Randstreifen in einem Überlappungsbereich der Länge $L_1$ der Supraleiterdrähte (1) entfernt und der verbleibende Teil (5) des Trägerbandes (2) (Restträgerband 5) jedes der zu verbindenden Supraleiterkabel ist in seiner Länge um einen der halben Länge $L_1$ des Überlappungsbereiches entsprechenden Teil gekürzt,

b) die stumpf zusammenstoßenden Enden des Restträgerbandes (5) sind im Überlappungsbereich der Supraleiterdrähte (1) mit einem Füllstreifen (6) aufgefüllt, dessen Breite durch die Breite der im Überlappungsbereich seitlich einander berührenden Supraleiterdrähte (1) bestimmt ist und der in dem über die Breite $b_3$ des Restträgerbandes (5) überragenden Bereich durch Falzen auf die Dicke d des Trägerbandes (2) verstärkt ist,

c) im Überlappungsbereich sind die Supraleiterdrähte (1) der zu verbindenden Supraleiterkabel alternierend nebeneinander auf das Restträgerband (5) bzw. den Füllstreifen (6) gelötet,

d) in der Mitte des Überlappungsbereiches sind die Supraleiterdrähte (1) gemeinsam von einer aus zwei miteinander heliumdicht verschweißten Teilen gebildeten Manchette (7) umschlossen,

e) das Ende jedes der Rechteckrohre (3) ist durch einen mit dem Rechteckrohr (3) heliumdicht verschweißten Rechteckflansch (8) abgeschlossen,

f) zwischen Manchette (7) und Rechteckflansch (8) ist auf die Supraleiterdrähte (1) ein Kühlkanäle aufweisendes, aus zwei am Rand durch Schrauben (9) miteinander verbundenen Teilen bestehendes Klemmstück (10) aufgesetzt,

g) ein aus zwei heliumdicht miteinander verschweißten Teilen bestehendes Abdeckblech (11) umschließt das Klemmstück (10) und ist mit der Manchette (7) und mit dem Rechteckflansch (8) heliumdicht verschweißt,

h) eines der zwei Teile des Abdeckbleches (11) weist eine Bohrung (12) auf, in die ein Kühlmittel transportierendes Rohr (13) heliumdicht eingeschweißt ist.

2. Kabelverbindung nach Anspruch 1, dadurch gekennzeichnet, daß in dem Bereich zwischen den Rechteckflanschen (8) eine aus zwei Teilen bestehende, die Abdeckbleche (11) und die Manchette (7) umschließende, an den Längsseiten Verschraubungen (19) und im Bereich der Rohre (13) Bohrungen (20) aufweisende Spannvorrichtung (18) angeordnet ist.

3. Kabelverbindung nach Anspruch 1, dadurch gekennzeichnet, daß das Klemmstück (10) an seiner den Supraleiterdrähten (1) zugewandten Seite in Kabellängsrichtung verlaufende erste Kühlkanäle (14) und an den dem Abdeckblech (11) zugewandten Längsseiten in Kabellängsrichtung verlaufende zweite Kühlkanäle (15) aufweist, und daß das Klemmstück (10) auf der dem Abdeckblech (11) zugewandten Seite quer zur Kabellängsrichtung verlaufende, die zweiten Kühlkanäle (15) verbindende dritte Kühlkanäle (17) aufweist.

4. Kabelverbindung nach Anspruch 1, dadurch gekennzeichnet, daß zwischen der einen Stirnseite des Klemmstückes (10) und der Manchette (7) und zwischen der anderen Stirnseite des Klemmstückes (10) und dem Rechteckflansch (8) je eine quer zur Kabellängsrichtung verlaufende Kammer (16) für Kühlmittel gebildet ist.

5. Einrichtung zum Herstellen einer Lötverbindung zwischen den Supraleiterdrähten (1) und dem Restträgerband (5) bzw. dem Füllstreifen (6) einer Kabelverbindung nach Anspruch 1, gekennzeichnet durch die Merkmale,

a) eine geteilte Klemmvorrichtung zum Anpressen der Supraleiterdrähte (1) an das Restträgerband (5) und den Füllstreifen (6) besteht im wesentlichen aus zwei die Supraleiterdrähte (1) umschließenden Klemmbacken (21), die seitlich angeordnete Spannschrauben (24) aufweisen und auf einer Längsseite

# 0 060 905

einen durchgehenden Spalt bilden und an der anderen Längsseite einen Anschlag für die Supraleiterdrähte (1) aufweisen,

b) in den Spalt (23) der Klemmvorrichtung ist eine die Supraleiterdrähte (1) in der Ebene des Restträgerbandes (5) und des Füllstreifens (6) verdichtende Preßschiene (25) einführbar, die im Bereich der Spannschrauben (24) Langlöcher (26) aufweist,

c) jedes der Klemmbacken (21) weist mehrere in Längsrichtung angeordnete Bohrungen (28) auf, in die Heizstäbe (29) eingeführt sind, deren Temperatur mit einem elektronischen Temperaturregler (30) einstellbar ist.

## Claims

1. Cable connection for high current superconductor cables the superconductor wires (1) of which are arranged at a specified distance from each other in a rectangular tube (3) on both sides of a carrier band (2) so as to form continuous liquid helium carrying coolant channels (4), characterized by the following features :

a) From the carrier band (2) formed on each of the two longitudinal sides from a sheet metal strip by welting of a border of 1/4 of the total width the welted border strips are removed in an overlapping zone of the length $L_1$ of the superconductor wires (1) and the remaining part (5) of the carrier band (2) (remaining carrier band 5) of each superconductor cable to be connected is shortened in length by an amount corresponding to half the length $L_1$ of the overlapping zone.

b) The butt jointed ends of the remaining carrier band (5) are filled in the overlapping zone of the superconductor wires (1) with a filler strip (6) the width of which being determined by the width of the superconductor wires (1) laterally contacting each other in the overlapping zone and reinforced through welting in the zone extending beyond the width $b_3$ of the remaining carrier band (5) so as to have the thickness d of the carrier band (2).

c) In the overlapping zone the superconductor wires (1) of the superconductor cables to be connected are alternately welded side by side onto the remaining carrier band (5) and the filler strip (6), respectively.

d) In the center of the overlapping zone the superconductor wires (1) are surrounded by a common packing consisting of two parts welded so as to be helium tight.

e) The end of each rectangular tube (3) is sealed by a rectangular flange (8) welded onto the rectangular tube (3) so as to make it helium tight.

f) Between the packing (7) and the rectangular flange (8) a clamping piece (10) is attached onto the superconductor wires (1) which consists of two parts with the edges interconnected by bolts (9) and provided with cooling channels.

g) A cover sheet (11) consisting of two welded parts so as to be helium tight surrounds the clamping piece (10) and is welded with the packing (7) and the rectangular flange (8) so as to be helium tight.

h) One of the two parts of the cover sheet (11) is provided with a bore (12) into which a coolant carrying tube (13) is welded so as to be helium tight.

2. Cable connection according to claim 1 wherein in the zone between the rectangular flanges (8) a clamping device (18) is provided consisting of two parts and surrounding the cover sheets (11) and the packing (7), with bolts (19) on the longitudinal sides and bores (20) in the zone of the tubes (13).

3. Cable connection according to claim 1 wherein the clamping piece (10) is provided on the side facing the superconductor wires (1) with first coolant channels (14) running along the longitudinal cable direction and on the longitudinal sides facing the cover sheet (11) with second coolant channels (15) running along the longitudinal cable direction and wherein the clamping piece (10) is provided on the side facing the cover sheet (11) with third coolant channels running transversally to the longitudinal cable direction and connecting the second coolant channels (15).

4. Cable connection according to claim 1 wherein between one front side of the clamping piece (10) and the packing (7) and between the other front side of the clamping piece (10) and the rectangular flange (8) one chamber each (16) accomodating the coolant is formed which runs transversally to the longitudinal cable direction.

5. Device for providing a soldered connection between the superconductor wires (1) and the remaining carrier band (5) and the filler strip (6), respectively, of a cable connection according to claim 1, characterized by the following features :

a) A divided clamping device for pressing the superconductor wires (1) onto the remaining carrier band (5) and onto the filler strip (6) consisting essentially of two clamping jaws (21) surrounding the superconductor wires (1) with lateral clamping screws (24) and forming on one longitudinal side a continuous gap and on the other longitudinal side a stopper for the superconductor wires (1).

b) A pressing rail (25) can be introduced into the gap (23) of the clamping device for compacting the superconductor wires (1) in the plane of the remaining carrier band (5) and of the filler strip (6) and provided with longitudinal holes (26) in the zone of clamping screws (24).

c) Each of the clamping jaws (21) is provided with several bores (28) arranged in the longitudinal

**0 060 905**

direction and accomodating heater rods (29) the temperatures of which can be adjusted by an electronic temperature control (30).

**Revendications**

1. Jonction de câble pour câble supraconducteur à haute tension où les fils supraconducteurs (1) sont disposés à une distance réciproque déterminée, sur les deux côtés d'une bande porteuse (2) dans un tube (3) rectangulaire, de façon à former des canaux (4) de refroidissement continus, où circule de l'hélium liquide, jonction caractérisée en ce que :

a) on élimine d'une bande porteuse (2), formée à partir d'une bande de tôle en repliant une bande marginale d'un quart de la largeur totale sur chacun des deux longs côtés, les bandes marginales repliées dans une zone de superposition de longueur $(L_1)$ des fils (1) supraconducteurs et on raccourcit la partie restante (5) de la bande porteuse (2) de chacun des côtés supraconducteurs à connecter à la moitié de la longueur $(L_1)$ de la partie correspondant de la zone de superposition,

b) on applique sur les bouts qui se rencontrent bout à bout du reste (5) de la bande porteuse, dans la zone de superposition des fils supraconducteurs (1), une bande de renfort (6), dont la largeur est déterminée par la largeur des fils supraconducteurs (1) qui se côtoient latéralement dans la zone de superposition, et qui est renforcée, par pliage à l'épaisseur d de la bande porteuse (2), dans la zone dépassant la largeur $(b_3)$ du reste (5) de la bande porteuse,

c) dans la zone de superposition, les fils (1) supraconducteurs du câble à connecter sont soudés alternativement, à côté les uns des autres, sur le reste de la bande porteuse (5) ou sur la bande de renforcement (6),

d) au milieu de la zone de superposition, les fils supraconducteurs (1) sont entourés, en commun, d'un manchon (7) formé de deux pièces soudées ensemble de façon à être étanches à l'hélium,

e) le bout de chacun des tubes rectangulaires (3) est fermé par un flasque (8) rectangulaire soudé, étanche à l'hélium, avec le tube rectangulaire (3),

f) entre le manchon (7) et le flasque rectangulaire (8), il est posé, sur les fils supraconducteurs (1), un organe de serrage (10), constitué de deux pièces reliées ensemble sur leurs bords par des vis (19), et présentant des canaux de refroidissement,

g) une tôle de recouvrement (11), constituée de deux parties soudées ensemble pour être étanches à l'hélium, enferme l'organe de serrage (10) et est soudé, étanche à l'hélium, avec le manchon (7) et avec le flasque (8) rectangulaire,

h) une des deux parties de la tôle de recouvrement (11) présente une perforation (12), dans laquelle est soudé, étanche à l'hélium, un tube (13) transportant un agent refroidissant.

2. Jonction de câble suivant la revendication 1, caractérisée en ce que, dans la zone qui est entre les flasques (8) rectangulaires, un dispositif de serrage (18) est placé et constitué de deux parties, entourant les tôles de recouvrement (11) et le manchon (7), présentant, sur ses longs côtés, des vissages (19), et, dans la zone des tubes (13), des perforations (20).

3. Jonction de câble suivant la revendication 1, caractérisée en ce que l'organe de serrage (10) présente sur sa face tournée vers les fils (1) supraconducteurs, de premiers canaux de refroidissement (14), s'étendant dans le sens de la longueur du câble, et sur ses longs côtés tournés vers la tôle de recouvrement (11), de seconds canaux (15) de refroidissement s'étendant dans le sens de la longueur du câble, et que l'organe de serrage (10) présente, sur sa face tournée vers la tôle de recouvrement (11), de troisièmes canaux de refroidissement (17) reliant les seconds canaux de refroidissement (15) et s'étendant transversalement à la longueur du câble.

4. Jonction de câble suivant la revendication 1, caractérisée en ce qu'entre l'une des faces frontales de l'organe de serrage (10) et le manchon (7), et entre l'autre face frontale de cet organe de serrage (10) et le flasque rectangulaire (8), il est formé chaque fois une chambre (16), destinée à l'agent refroidissant, s'étendant transversalement au sens de la longueur du câble.

5. Installation pour l'établissement d'une jonction soudée entre les fils supraconducteurs (1) et le reste de la bande porteuse (5) ou la bande de renfort (6) d'une jonction de câble suivant la revendication 1, caractérisée en ce que :

a) un dispositif de serrage en plusieurs parties, destiné à serrer les fils (1) supraconducteurs sur le reste de la bande porteuse (5) et sur la bande (6) de renfort est constitué essentiellement de deux mâchoires de serrage (21) entourant les fils supraconducteurs (1) et qui présentent des vis de serrage (24) disposées latéralement, et forment sur un long côté, une fente continue, et présentent sur l'autre long côté une butée pour les fils (1) supraconducteurs,

b) dans la fente (23) du dispositif de serrage, on peut introduire une barre de pressage (25) comprimant les fils (1) supraconducteurs dans le plan du reste (5) de la bande porteuse et de la bande de renfort (6), et qui présente, dans la zone des vis de serrage (24), des trous oblongs (26),

c) chacune des mâchoires de serrage (21) présente plusieurs perforations (28) disposées sur la longueur, dans lesquelles sont insérées des barres chauffantes (29), dont la température peut être réglée au moyen d'un régulateur (30) électronique de la température.

6

Fig. 1

# Fig. 2

# Fig. 4

# Fig. 3